# EUROPÄISCHE PATENTSCHRIFT

(11) **EP 3 197 716 B1**
(45) Veröffentlichungstag und Bekanntmachung des Hinweises auf die Patenterteilung: **25.11.2026**
(21) Anmeldenummer: 15770496.6
(22) Anmeldetag: 22.09.2015
(51) Int. Cl.: B60Q 1/08, B60Q 1/14, B60Q 1/12

(54) **VERFAHREN ZUR STEUERUNG DER LICHTVERTEILUNG VON FAHRZEUGSCHEINWERFERN UND FAHRZEUG**
METHOD FOR CONTROLLING THE LIGHT DISTRIBUTION OF VEHICLE HEADLIGHTS AND VEHICLE
PROCÉDÉ DE COMMANDE DE LA DISTRIBUTION DE LA LUMIÈRE DE PHARES DE VÉHICULE ET VÉHICULE

(30) Priorität: 24.09.2014 DE 102014219323
(43) Veröffentlichungstag der Anmeldung: 02.08.2017
(73) Patentinhaber: AUMOVIO Germany GmbH, 60488 Frankfurt am Main (DE)
(72) Erfinder: STÄHLIN, Ulrich, 65760 Eschborn (DE)
(74) Vertreter: Aumovio Corporation
(86) Internationale Anmeldenummer: PCT/EP2015/071753
(87) Internationale Veröffentlichungsnummer: WO 2016/046209

(56) Entgegenhaltungen:
- WO-A1-2010/133586
- WO-A1-2013/014508
- DE-A1- 10 241 133
- DE-A1- 102006 004 130
- DE-A1- 102010 007 866
- DE-A1- 102011 055 794
- DE-A1- 102011 076 644
- DE-A1- 102011 081 367
- DE-A1- 102012 009 908
- DE-A1- 102012 018 488
- DE-A1- 19 758 155
- DE-A1- 19 948 733
- US-A1- 2014 145 838
- US-A1- 2014 177 243

## Beschreibung

Die Erfindung betrifft ein Verfahren zur Steuerung der Lichtverteilung von Fahrzeugscheinwerfern sowie ein Fahrzeug mit einer elektronischen Schaltung, welche zur Ausführung eines solchen Verfahrens ausgebildet ist.

Fahrzeugscheinwerfer waren früher üblicherweise feststehend. Dies bedeutet, dass sie lediglich in eine durch die Ausrichtung des Gesamtfahrzeugs vorgegebene Richtung leuchten konnten. Gerade bei kurvigem Streckenverlauf oder auch beim Abbiegen führt eine solch starre Lichtverteilung nicht zu idealen Ergebnissen, da relevante Bereiche der Fahrtstrecke nicht gut ausgeleuchtet sind. Deshalb wurden zunächst Kurvenscheinwerfer eingeführt, welche die Leuchtrichtung der Fahrzeugscheinwerfer dynamisch anpassen, beispielsweise abhängig vom Lenkeinschlag oder von Kartendaten, welche den Verlauf der gefahrenen Strecke angeben. Damit kann insbesondere bei Kurvenfahrten und beim Abbiegen die Lichtverteilung der Fahrzeugscheinwerfer besser an die tatsächlichen Bedürfnisse angepasst werden.

Für den Normalbetrieb, beispielsweise in bebauten Gebieten oder außerhalb von bebauten Gebieten bei Gegenverkehr oder vorausfahrendem Verkehr leuchten Fahrzeugscheinwerfer üblicherweise als Abblendlicht. Typischerweise ist auch die Funktionalität eines Fernlichts vorgesehen, welches eine erheblich höhere Reichweite aufweist und somit die zu fahrende Strecke besser ausleuchtet. Damit können der Streckenverlauf und auch etwaige Hindernisse besser erkannt werden. Da das Fernlicht jedoch Gegenverkehr oder vorausfahrenden Verkehr blenden würde, kann es nur dann eingesetzt werden, wenn innerhalb der Reichweite des Fernlichts keine anderen Verkehrsteilnehmer vorhanden sind.

Das Fernlicht wurde früher typischerweise manuell gesteuert, wobei der Fahrer mittels eines Hebels oder eines Schalters die Scheinwerfer auf- und abblenden konnte. Neuere Systeme können das Fernlicht basierend auf Kameradaten automatisch steuern. Dabei werden beispielsweise entgegenkommende oder vorausfahrende Verkehrsteilnehmer anhand ihrer Frontscheinwerfer oder Rücklichter erkannt und das Fernlicht wird abhängig davon ein- oder ausgeschaltet, ob solche Verkehrsteilnehmer vorhanden sind. Dies entlastet den Fahrer, vermeidet eine Blendung von anderen Verkehrsteilnehmern aufgrund zu späten Abblendens und ermöglicht ein schnelles Aufblenden in Situationen, in welchen keine Verkehrsteilnehmer im Ausleuchtbereich des Fernlichts vorhanden sind. Derartige Systeme zum automatischen Auf- oder Abblenden des Fernlichts werden auch als Fernlichtassistent bezeichnet.

Eine weitere Verbesserung des Konzepts des Fernlichtassistenten stellen neue Systeme dar, in welchen die Lichtverteilung der Scheinwerfer dynamisch angepasst wird. Dabei können entgegenkommende oder vorausfahrende Fahrzeuge ebenfalls anhand ihrer Frontscheinwerfer oder Rücklichter erkannt werden, das Fernlicht kann jedoch auch dann angeschaltet werden, wenn solche Fahrzeuge im Ausleuchtbereich des Fernlichts vorhanden sind. In diesem Fall kann beispielsweise die Leuchtweite des Fernlichts automatisch angepasst werden, so dass die Scheinwerfer nur so weit leuchten, dass andere Verkehrsteilnehmer nicht geblendet werden. Auch ist es möglich, aus einem weit ausleuchtenden Fernlichtkegel einen dynamisch anpassbaren Tunnel herauszunehmen, welcher so gewählt ist, dass ein entgegenkommendes oder vorausfahrendes Fahrzeug sich genau in dem Tunnel befindet. Damit kann eine Blendung des Fahrers dieses Fahrzeugs vermieden werden, wobei trotzdem der bestmögliche Ausleuchtbereich durch die Fahrzeugscheinwerfer erreicht wird.

Nachteilig an bestehenden Systemen zur Lichtverteilung von Fahrzeugscheinwerfern ist insbesondere, dass diese zusätzliche Komponenten wie eine Kamera oder eine digitale Straßenkarte benötigen. Die Notwendigkeit solcher vergleichsweise teurer Komponenten kann gerade bei Fahrzeugen im unteren Preissegment die Einführung von Fernlichtassistenten, welche einen erheblichen Sicherheitsgewinn mit sich bringen, deutlich behindern.

Das Dokument DE 10 2012 009 908 A1 offenbart ein Verfahren und eine Vorrichtung zur Steuerung der Ausleuchtung einer durch mindestens zwei Kraftfahrzeuge gebildeten Verkehrssituation, wobei die Kraftfahrzeuge mittels Fahrzeug-zu-X-Kommunikation Daten austauschen.

Das Dokument DE 10 2011 076 644 A1 offenbart ein Verfahren zum Steuern einer variablen Lichtverteilung eines Scheinwerfers eines Kraftfahrzeugs. Dabei werden Informationen über das Umfeld des Kraftfahrzeugs erfasst und die Lichtverteilung wird abhängig davon variiert.

Das Dokument DE 10 2010 007 866 A1 offenbart ein Verfahren zum Einstellen der Lichtverteilung von Fahrzeugscheinwerfern eines Kraftfahrzeuges in Abhängigkeit von einer Verkehrssituation.

Das Dokument DE 199 48 733 A1 offenbart ein Fahrzeugkommunikationssystem zur Kommunikation zwischen Fahrzeugen.

Das Dokument US 2014/0177243 A1 offenbart eine Vorrichtung und ein Verfahren zum Steuern eines Fahrzeugscheinwerfers. Dabei wird ein Straßenzustand erkannt und verwendet.

Das Dokument DE 10 2012 018 488 A1 offenbart eine Fahrzeugbeleuchtungseinrichtung für ein Kraftfahrzeug, bei welcher ausgesandte Positionsdaten wenigstens eines weiteren Kraftfahrzeugs verwendet werden.

Das Dokument WO 2010/133586 A1 offenbart ein Verfahren zur Zuordnung von neuen Daten zu einer digitalen Karte.

Es ist deshalb eine Aufgabe der Erfindung, ein Verfahren zur Steuerung der Lichtverteilung von Fahrzeugscheinwerfern vorzusehen, welches im Vergleich zu Ausführungen gemäß dem Stand der Technik verbessert ist. Es ist des Weiteren eine Aufgabe der Erfindung, ein Fahrzeug mit einer elektronischen Schaltung vorzusehen, welche zur Ausführung eines solchen Verfahrens ausgebildet ist.

Dies wird erfindungsgemäß durch ein Verfahren nach Anspruch 1 sowie ein Fahrzeug nach Anspruch 14 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die erfindungsgemäße Verwendung von Daten aus einer Fahrzeug-zu-X-Kommunikation ermöglicht es, auf den Einsatz von Kameras und/oder digitalen Karten zu verzichten. Damit können die Kosten für die Implementierung eines Fernlichtassistenten und überhaupt einer variablen Lichtverteilung deutlich gesenkt werden. Es ist typischerweise lediglich ein Fahr-zeug-zu-X-Kommunikationsmodul erforderlich, wobei ein solches auch viele andere Vorteile insbesondere hinsichtlich der Fahrzeugsicherheit mit sich bringt. Deshalb ist zu erwarten, dass derartige Fahrzeug-zu-X-Kommunikationsmodule künftig auch in Fahrzeugen unterer Preissegmente häufiger implementiert werden. Im Unterschied dazu handelt es sich bei digitalen Karten eher um Komponenten mit Komfortfunktionen, welche keinen so deutlichen Sicherheitsgewinn mit sich bringen und gerade in Fahrzeugen unterer Preissegmente häufig durch kleine, tragbare Navigationsgeräte oder auch durch Mobiltelefone mit entsprechender Software ersetzt werden.

Unter einer Fahrzeug-zu-X-Kommunikation werden insbesondere eine Fahrzeug-zu-Fahrzeug-Kommunikation sowie eine Fahrzeug-zu-Infrastruktur-Kommunikation verstanden. Bei einer Fahrzeug-zu-Fahrzeug-Kommunikation können zwischen Fahrzeugen Daten wie beispielsweise Geschwindigkeit, Kurs, Spurwechselabsichten oder auch Informationen über liegengebliebene Fahrzeuge oder Sondereinsatzrechte ausgetauscht werden. Dies ermöglicht eine erheblich weiterreichende Information von Verkehrsteilnehmern über das Verkehrsgeschehen, als dies im klassischen Sichtfeld eines Fahrers einschließlich eines durch Rückspiegel eröffneten Sichtfeldes möglich ist. Unter einer Fahrzeug-zu-Infrastruktur-Kommunikation wird insbesondere ein Datenaustausch zwischen Fahrzeugen und Einrichtungen wie Verkehrsleitsystemen, elektronischen Verkehrszeichen oder Verkehrsinformationssystemen verstanden. So kann beispielsweise eine variabel festgesetzte Geschwindigkeitsbegrenzung über Fahrzeug-zu-Infrastruktur-Kommunikation im Wege der drahtlosen Datenübermittlung Fahrzeugen, welche sich auf der entsprechend geschwindigkeitsbegrenzten Strecke befinden, mitgeteilt werden. Die Zuverlässigkeit eines solchen Systems wird im Regelfall besser sein als die derzeit übliche Erkennung von Verkehrszeichen mittels in den Fahrzeugen eingebauten Kameras.

Fahrzeug-zu-X-Kommunikationsmodule haben typischerweise ein Satellitennavigationsmodul integriert oder sind mit einem solchen Satellitennavigationsmodul, welches im Fahrzeug vorhanden ist, gekoppelt. Eine digitale Karte ist jedoch für typische Funktionalitäten einer Fahrzeug-zu-X-Kommunikation nicht zwingend erforderlich.

Gerade wegen der hohen Funktionalität der Fahr-zeug-zu-X-Kommunikation, welche einen erheblichen Sicherheitsgewinn mit sich bringt, ist bei deren Einführung im Massenmarkt zu erwarten, dass sie sich über alle Preisklassen von Fahrzeugen hinweg schnell durchsetzen wird. Mittels des erfindungsgemäßen Verfahrens wird somit eine deutlich erhöhte Verbreitung von Fahrzeugscheinwerfersystemen mit dynamischer Lichtverteilung ermöglicht, welche derzeit an teuren Komponenten wie Kameras oder digitalen Karten scheitert. Dies bedeutet insgesamt eine erhebliche Erhöhung der Verkehrssicherheit.

Gemäß einer bevorzugten Ausführung beinhaltet die Lichtverteilung eine Leuchtweite der Fahrzeugscheinwerfer. Dies kann beispielsweise bedeuten, dass die Fahrzeugscheinwerfer so ausgebildet sind, dass sie in einem einstellbaren Winkel zur Fahrbahn hin ihr Licht abstrahlen. Bei dichtem Verkehr kann dann beispielsweise ein Abstrahlwinkel gewählt werden, welcher demjenigen eines klassischen Abblendlichts entspricht. Dies ist die minimale Leuchtweite, welche ein Fahrzeug im Betrieb bei Nacht oder sonstigen schwierigen Sichtverhältnissen immer haben sollte. Wenn beispielsweise ein vorausfahrendes Fahrzeug einen großen Abstand hat und keine Fahrzeuge entgegenkommen, kann die Leuchtweite durch Wahl eines flacheren Winkels erhöht werden. Die Leuchtweite kann dabei dynamisch an den Abstand des vorausfahrenden Fahrzeugs angepasst werden. Ebenso kann die Leuchtweite auch an entgegenkommende Fahrzeuge angepasst werden, um diese nicht zu blenden. Es sei verstanden, dass die Leuchtweite auch in Sektoren unterschiedlich eingestellt werden kann.

Gemäß einer bevorzugten Ausführung beinhaltet die Lichtverteilung eine Leuchtrichtung oder mehrere Leuchtrichtungen der Fahrzeugscheinwerfer. Die Verwendung nur einer Leuchtrichtung kommt insbesondere dann in Betracht, wenn die Fahrzeugscheinwerfer grundsätzlich einen in horizontaler Richtung geschlossenen Lichtkegel ausstrahlen, wobei sie den Abstrahlwinkel dieses Lichtkegels verändern können. Beispielsweise kann der Lichtkegel weiter nach links oder weiter nach rechts verschoben werden. Die Verwendung von mehreren Leuchtrichtungen kommt insbesondere dann in Betracht, wenn die Fahrzeugscheinwerfer dazu ausgebildet sind, den Lichtkegel zu unterbrechen und beispielsweise Tunnel für vorausfahrende oder entgegenkommende Fahrzeuge zu bilden. In diesem Fall hat jeder Teil des Lichtkegels eine eigene Leuchtrichtung oder kann auch durch mehrere Leuchtrichtungen, welche jeweils den Lichtkegel horizontal begrenzen, definiert werden.

Bevorzugt stammen die Daten zumindest teilweise von anderen Fahrzeugen. Dies ist insbesondere im Rahmen einer Fahr-zeug-zu-Fahrzeug-Kommunikation möglich. Solche Daten enthalten weiter bevorzugt zumindest teilweise Informationen über eine jeweilige gefahrene Fahrtstrecke. Dies ermöglicht Rückschlüsse auf Fahrtstrecken anderer Fahrzeuge durch das empfangende Fahrzeug, in welchem das erfindungsgemäße Verfahren implementiert ist. Diese Informationen über eine jeweilige gefahrene Fahrtstrecke können dabei beispielsweise auch als sogenannte Traces ausgebildet sein, also als Folge von Aufenthaltspunkten des Fahrzeugs zu festen Zeitabständen.

Bevorzugt weist das Verfahren ferner einen Schritt des Berechnens eines Streckenverlaufs basierend auf den Informationen über jeweilige gefahrene Fahrtstrecken anderer Fahrzeuge auf, wobei der berechnete Streckenverlauf im Schritt des Berechnens der Lichtverteilung verwendet wird. Dies kann beispielsweise bedeuteten, dass die Informationen über gefahrene Strecken anderer Fahrzeuge dazu verwendet werden, um den Streckenverlauf, welchen das eigene Fahrzeug fahren wird, vorauszuberechnen. Eine solche Information kann besonders vorteilhaft bei der Steuerung der Lichtverteilung verwendet werden, so dass beispielsweise Kurven besser ausgeleuchtet werden können. Es ist dabei nicht notwendig, eine digitale Karte im Fahrzeug verfügbar zu haben.

Die Daten, welche von anderen Fahrzeugen stammen, beinhalten bevorzugt zumindest teilweise periodische Signale mit der jeweiligen aktuellen Position des anderen Fahrzeugs. Solche Signale können auch als periodische Beacons bezeichnet werden. In Europa kann es sich dabei beispielsweise um CAM-Nachrichten handeln. In den USA kann es sich beispielsweise um BSM (Basic Safety Message)-Nachrichten handeln. Derartige periodische Signale werden häufig ohnehin von Fahrzeugen ausgesandt, welche an einer Fahrzeug-zu-X-Kommunikation teilnehmen, und können mittels dieser Implementierung des erfindungsgemäßen Verfahrens in vorteilhafter Weise für die Steuerung der Lichtverteilung von Fahrzeugscheinwerfern verwendet werden.

Bevorzugt weist das Verfahren einen Schritt des Berechnens eines Streckenverlaufs basierend auf den periodischen Signalen auf, wobei der berechnete Streckenverlauf im Schritt des Berechnens der Lichtverteilung verwendet wird. Hierbei können insbesondere die Informationen über die jeweils aktuelle Position von anderen Fahrzeugen dazu verwendet werden, um einen Streckenverlauf vorauszuberechnen, welchen das eigene Fahrzeug künftig fahren wird. Beispielsweise kann dabei eine Aneinanderreihung von Positionen anderer Fahrzeuge erfolgen, was bei geeigneter Zusammensetzung der erhaltenen Positionen eine gute Abschätzung des Streckenverlaufs ermöglicht. Ein solches Vorgehen kann dem elektronischen Abbilden einer "Ameisenstraße" ähneln.

Bevorzugt weist das Verfahren ferner einen Schritt des Erkennens entgegenkommender oder vorausfahrender Fahrzeuge unter Verwendung der periodischen Signale auf, wobei die Positionen und/oder Fahrtstrecken entgegenkommender oder vorausfahrender Fahrzeuge im Schritt des Berechnens der Lichtverteilung verwendet werden. Damit kann nicht nur der Streckenverlauf unter Verwendung der Fahrzeug-zu-X-Kommunikation berechnet werden, sondern es kann auch auf entgegenkommende oder vorausfahrende Fahrzeuge Rücksicht genommen werden, ohne dass es einer hierfür bislang üblicherweise verwendeten Kamera bedarf. Dies ermöglicht eine bessere Steuerung der Lichtverteilung, welche beispielsweise gezielt entgegenkommende oder vorausfahrende Fahrzeuge aus der Lichtverteilung herausnehmen kann, um diese nicht zu blenden, gleichzeitig jedoch trotzdem einen bestmöglichen Ausleuchtbereich ermöglicht.

Erfindungsgemäß weist das Verfahren ferner in dem Fall, in welchem innerhalb eines vorgegebenen Zeitraums nur unzureichend wenige Daten aus Fahrzeug-zu-X-Kommunikation empfangen werden, einen Schritt der Einstellung der Lichtverteilung auf einen Standardwert auf. Diesen Schritt kann es auch aufweisen, wenn innerhalb eines vorgegebenen Zeitraums keine Daten aus Fahrzeug-zu-X-Kommunikation empfangen werden. Ein solcher Standardwert entspricht einem klassischen Abblendlicht. Wenn keine Daten aus Fahrzeug-zu-X-Kommunikation empfangen werden, kann dies beispielsweise darauf hindeuten, dass die Fahrzeug-zu-X-Kommunikation gestört ist oder dass keine mit Fahrzeug-zu-X-Kommunikation ausgestatteten Fahrzeuge in der Funkreichweite sind. In diesem Fall kann typischerweise keine über das normale Abblendlicht hinausgehende Lichtverteilung eingestellt werden, da die Gefahr des Blendens anderer Verkehrsteilnehmer zu groß wäre. Wenn nur unzureichend wenige Daten aus Fahrzeug-zu-X-Kommunikation empfangen werden, was erfindungsgemäß der Fall ist, wenn die Anzahl der eingehenden Daten unter einem bestimmten Schwellenwert liegt, so kann dies darauf hindeuten, dass die Strecke nur schwach befahren ist. In diesem Fall kann eine Vorausberechnung der Strecke erschwert oder unmöglich sein, da hierfür nicht genügend Daten zur Verfügung stehen. Es sei verstanden, dass in solchen Fällen auf klassische Verfahren zur Steuerung der Lichtverteilung zurückgegriffen werden kann, beispielsweise die Einstellung von Leuchtrichtungen basierend auf einem Lenkeinschlag oder die manuelle Steuerung des Fernlichts durch den Fahrer.

Gemäß einer Ausführung wird das erfindungsgemäße Verfahren ohne Verwendung von Kameradaten und/oder ohne Verwendung von Kartendaten ausgeführt. Damit kann auf die Verwendung von teuren Kameras oder elektronischen Karten verzichtet werden. Dies ermöglicht die Implementierung des erfindungsgemäßen Verfahrens auch in Fahrzeugen unterer Preissegmente.

Es sei jedoch verstanden, dass bei Vorhandensein von Komponenten wie Kameras, separaten Satellitennavigationssystemen oder digitalen Karten diese zusätzlich für die Verwendung des erfindungsgemäßen Verfahrens benutzt werden können. Anders ausgedrückt kann die Steuerung der Lichtverteilung sowohl auf Fahr-zeug-zu-X-Kommunikation wie auch auf Daten von Kameras, Satellitennavigationssystemen und/oder digitalen Karten basieren. Gemäß einer Ausführung basiert das Berechnen der Lichtverteilung zusätzlich auf Kameradaten und/oder Kartendaten.

Bevorzugt wird das Verfahren in einer elektronischen Schaltung, vorzugsweise einer Fernlichtassistentenschaltung, ausgeführt. Bei einer solchen elektronischen Schaltung kann es sich beispielsweise um einen Mikroprozessor, einen Mikrocontroller, einen frei programmierbaren Computer, einen anwendungsspezifischen integrierten Schaltkreis (ASIC) oder ein anderes ähnliches Element handeln. Bevorzugt weist eine elektronische Schaltung Prozessormittel und Speichermittel auf, wobei in den Speichermitteln Programmcode gespeichert ist, bei dessen Ausführung sich die Prozessormittel in definierter Weise verhalten. Beispielsweise führen sie in diesem Fall das erfindungsgemäße Verfahren gemäß einer der beschriebenen Varianten und Ausführungen aus. Es sei verstanden, dass die Erfindung auch eine solche elektronische Schaltung betrifft.

Die Erfindung betrifft des Weiteren ein Fahrzeug, aufweisend:
- Fahrzeug-zu-X-Kommunikationsmittel,
- eine elektronische Schaltung, welche zur Ausführung eines erfindungsgemäßen Verfahrens ausgebildet ist, sowie
- zumindest einen Scheinwerfer, dessen Lichtverteilung von der elektronischen Schaltung gesteuert wird.

Mittels des erfindungsgemäßen Fahrzeugs können die weiter oben beschriebenen Vorteile des erfindungsgemäßen Verfahrens für ein Fahrzeug nutzbar gemacht werden. Hinsichtlich des Verfahrens kann dabei auf alle weiter oben beschriebenen Varianten und Ausführungen zurückgegriffen werden. Erläuterte Vorteile gelten entsprechend.

Die Fahrzeug-zu-X-Kommunikationsmittel können insbesondere als Schnittstelle oder Modul für die drahtlose Kommunikation mit anderen Fahrzeugen und/oder mit Infrastruktur ausgebildet sein.

Es sei verstanden, dass vierrädrige Fahrzeuge typischerweise zwei oder auch vier Scheinwerfer haben, welche mittels des erfindungsgemäßen Verfahrens gesteuert werden. Bevorzugt werden sie zusammen gesteuert. Andere Fahrzeuge, wie beispielsweise zweirädrige Fahrzeuge oder teilweise auch Schienenfahrzeuge, haben typischerweise lediglich einen Scheinwerfer bzw. drei Scheinwerfer, dessen bzw. deren Lichtverteilung ebenfalls mittels des erfindungsgemäßen Verfahrens gesteuert werden kann. Zusätzlich können weitere vordere Leuchtmittel wie Tagfahrlichter, Blinker, Begrenzungsleuchten, Akzentleuchten, statische Abbiegescheinwerfer oder Nebelscheinwerfer vorhanden sein, welche ebenfalls mittels des erfindungsgemäßen Verfahrens gesteuert werden können. Es sei verstanden, dass jede beliebige Anzahl von Scheinwerfern mittels des erfindungsgemäßen Verfahrens gesteuert werden kann.

Weitere Merkmale und Vorteile der Erfindung werden dem Fachmann bei Betrachtung der nachfolgend mit Bezug auf die beigefügte Zeichnung beschriebenen Ausführungsbeispiele ersichtlich werden. Dabei zeigen:
Fig. 1: eine Konstellation, in welcher das erfindungsgemäße Verfahren vorteilhaft zur Steuerung einer Leuchtweite angewendet werden kann,
Fig. 2: eine Konstellation, in welcher das erfindungsgemäße Verfahren vorteilhaft zur Steuerung einer Leuchtrichtung angewendet werden kann.

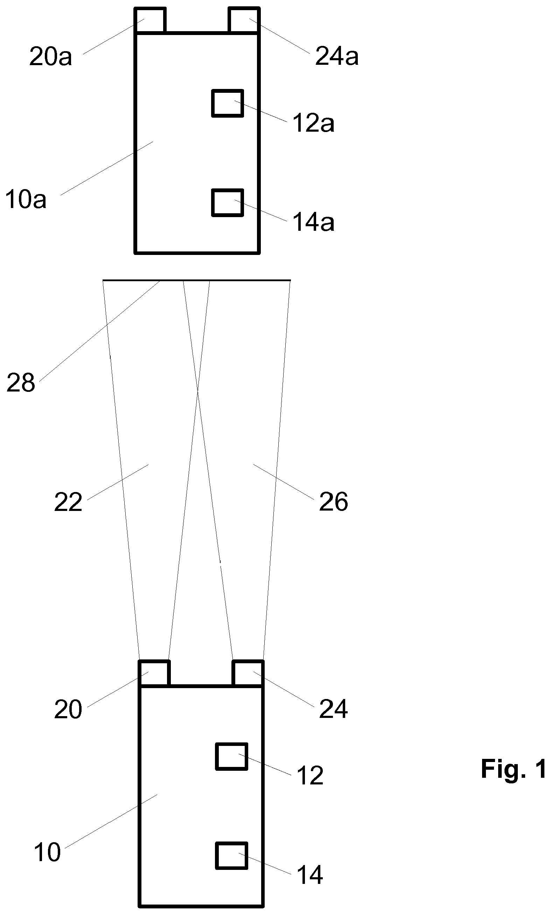

Fig. 1 zeigt ein Fahrzeug 10, welches eine elektronische Schaltung 12 zur Ausführung des erfindungsgemäßen Verfahrens aufweist. Die elektronische Schaltung 12 weist hierzu insbesondere Prozessormittel und Speichermittel auf, wobei in den Speichermitteln Programmcode gespeichert ist, bei dessen Ausführung die Prozessormittel das erfindungsgemäße Verfahren ausführen. Das Fahrzeug 10 weist des Weiteren Fahrzeug-zu-X-Kommunikationsmittel in Form eines Kommunikationsmoduls 14 auf, welches dazu ausgebildet ist, mit anderen Fahrzeugen und auch mit Infrastruktureinrichtungen Daten auszutauschen. Fahrzeug-zu-X-Kommunikation ist als solche weitgehend bekannt, weshalb auf eine detaillierte Beschreibung an dieser Stelle verzichtet wird.

Das Fahrzeug 10 weist des Weiteren einen ersten Scheinwerfer 20 und einen zweiten Scheinwerfer 24 auf. Der erste Scheinwerfer 20 strahlt einen ersten Lichtkegel 22 ab, wohingegen der zweite Scheinwerfer 24 einen zweiten Lichtkegel 26 abstrahlt. Beide Lichtkegel 22, 26 enden an einer gemeinsamen Hell-Dunkel-Grenze 28.

Vor dem Fahrzeug 10 fährt ein weiteres, vorausfahrendes Fahrzeug 10a. Das weitere Fahrzeug 10a weist ebenfalls eine elektronische Schaltung 12a sowie ein Kommunikationsmodul 14a zur Fahrzeug-zu-X-Kommunikation auf. Des Weiteren weist auch das weitere Fahrzeug 10a einen weiteren ersten Scheinwerfer 20a und einen weiteren zweiten Scheinwerfer 24a auf, wobei jedoch auf deren Steuerung hier nicht eingegangen werden soll. Dementsprechend sind auch keine Lichtkegel dieser Scheinwerfer 20a, 24a dargestellt.

Sowohl das Kommunikationsmodul 14 wie auch das weitere Kommunikationsmodul 14a sind mit einem jeweiligen Satellitennavigationssystem ausgestattet, um jeweilige Positionen der Fahrzeuge 10, 10a zu erfassen. Diese Positionen werden in periodischen Signalen ausgesandt, so dass anderen Fahrzeugen die Position des jeweiligen Fahrzeugs 10, 10a bekannt ist. Über Satellitennavigation wird auch eine globale Zeitreferenz zur Verfügung gestellt, welche von den Fahrzeugen 10, 10a verwendet wird, insbesondere um die auszusendenden Signale mit einem jeweiligen Zeitstempel zu versehen. Dies ermöglicht es, dass andere Fahrzeuge unter Verwendung der gleichen Zeitreferenz wissen, zu welcher Zeit sich das jeweilige Fahrzeug 10, 10a an welchem Ort befindet. Dies ermöglicht insbesondere auch eine Berechnung der vergangenen Fahrtstrecke eines jeweiligen Fahrzeugs 10, 10a.

Im vorliegenden Fall sendet insbesondere das weitere Fahrzeug 10a laufend periodische Signale aus, welche die Position des weiteren Fahrzeugs 10a zu einer jeweiligen Zeit beinhalten. In dem Fahrzeug 10 sind aufgrund des in dem Kommunikationsmodul 14 enthaltenen Satellitennavigationssystems ebenfalls die eigene Fahrzeugposition sowie die auch vom weiteren Fahrzeug 10a verwendete globale Zeitreferenz bekannt. Dies ermöglicht es, den Abstand der beiden Fahrzeuge 10, 10a mit hoher Genauigkeit zu berechnen. Basierend auf diesem Abstand wird die Leuchtweite der Scheinwerfer 20, 24 eingestellt, so dass die Hell-Dunkel-Grenze 28 unmittelbar hinter dem weiteren Fahrzeug 10a liegt. Dies ermöglicht eine bestmögliche Ausleuchtung der Fahrbahn vor dem Fahrzeug 10, ohne einen Fahrer des weiteren Fahrzeugs 10a zu blenden.

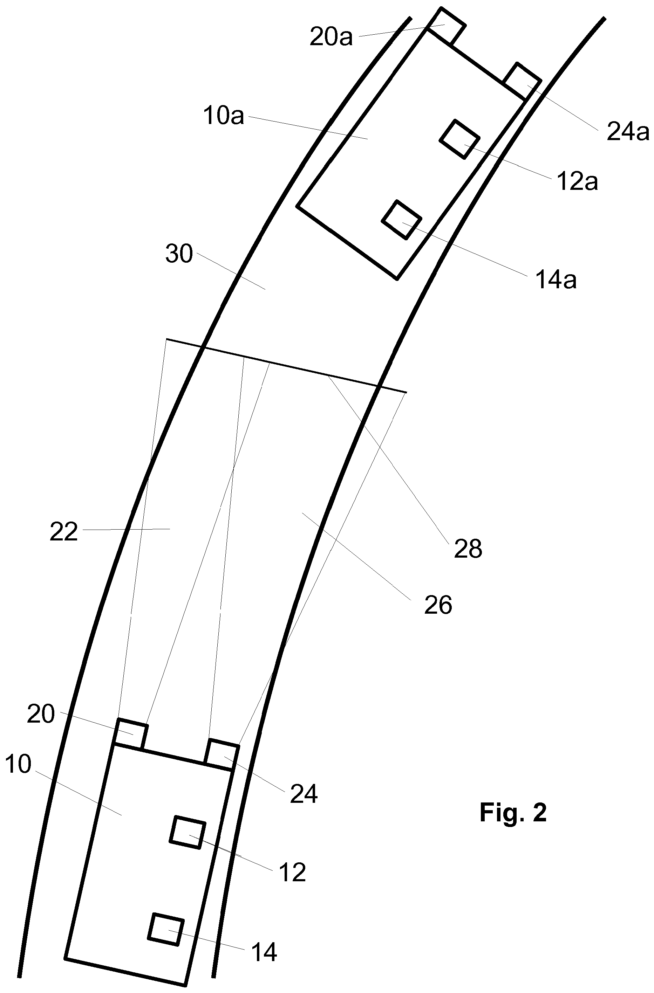

Fig. 2 zeigt die beiden Fahrzeuge 10, 10a in einer anderen Konstellation. Bezüglich der einzelnen Komponenten wird auf die Beschreibung zu Fig. 1 verwiesen.

In Fig. 2 bewegen sich die beiden Fahrzeuge 10, 10a entlang einer Fahrspur 30. Hierbei kann es sich beispielsweise um eine Fahrspur einer Landstraße handeln. Die Fahrspur 30 ist wie gezeigt nicht gerade, sondern beschreibt eine Kurve, welcher die Fahrzeuge 10, 10a folgen.

Mittels der periodischen Signale des weiteren Fahrzeugs 10a ist es dem Fahrzeug 10 möglich, den Streckenverlauf der Fahrspur 30 vorauszuberechnen. Dies ermöglicht es der elektronischen Schaltung 12 des Fahrzeugs 10, die Scheinwerfer 20, 24 des Fahrzeugs 10 so zu steuern, dass deren Leuchtrichtung sich dem Streckenverlauf der Fahrspur 30 anpasst. Im vorliegenden Fall werden damit die beiden Lichtkegel 22, 26 etwas nach rechts verschoben, um dem Verlauf der Fahrspur 30 besser zu folgen. Dies ermöglicht eine bessere Ausleuchtung der Fahrspur 30 und damit eine bessere Sicht, welche der Vermeidung von Unfällen hilft. Sollten über einen gewissen Zeitraum zu wenige Daten aus der Fahrzeug-zu-X-Kommunikation vorliegen, um andere Fahrzeuge zuverlässig zu erkennen oder die Fahrspur 30 vorauszuberechnen, so stellt die elektronische Schaltung 30 die Lichtverteilung der Fahrzeugscheinwerfer 20, 24 auf einen Standardwert, welcher einem klassischen, statischen Abblendlicht entspricht. Dies vermeidet eine Blendung anderer Verkehrsteilnehmer.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zur Steuerung der Lichtverteilung von Fahrzeugscheinwerfern (20, 24), welches folgende Schritte aufweist:
- Empfangen von Daten aus einer Fahrzeug-zu-X-Kommunikation, und
- Berechnen der Lichtverteilung basierend zumindest auf diesen Daten,
**dadurch gekennzeichnet, dass**
das Verfahren in dem Fall, in welchem innerhalb eines vorgegebenen Zeitraums weniger Daten aus Fahrzeug-zu-X-Kommunikation empfangen werden als ein vorgegebener Schwellenwert, einen Schritt der Einstellung der Lichtverteilung auf einen Standardwert, welcher einem Abblendlicht der Fahrzeugscheinwerfer (20, 24) entspricht, aufweist.

2. Verfahren nach Anspruch 1,
wobei die Lichtverteilung eine Leuchtweite der Fahrzeugscheinwerfer (20, 24) beinhaltet.

3. Verfahren nach einem der vorhergehenden Ansprüche,
wobei die Lichtverteilung eine Leuchtrichtung oder mehrere Leuchtrichtungen der Fahrzeugscheinwerfer (20, 24) beinhaltet.

4. Verfahren nach einem der vorhergehenden Ansprüche,
wobei die Daten zumindest teilweise von anderen Fahrzeugen (10a) stammen.

5. Verfahren nach Anspruch 4,
wobei die Daten, welche von anderen Fahrzeugen (10a) stammen, zumindest teilweise Informationen über eine jeweilige gefahrene Fahrtstrecke beinhalten.

6. Verfahren nach Anspruch 5,
welches ferner einen Schritt des Berechnens eines Streckenverlaufs (30) basierend auf den Informationen über jeweilige gefahrene Fahrtstrecken anderer Fahrzeuge (10a) aufweist,
wobei der berechnete Streckenverlauf (30) im Schritt des Berechnens der Lichtverteilung verwendet wird.

7. Verfahren nach einem der Ansprüche 4 bis 6,
wobei die Daten, welche von anderen Fahrzeugen (10a) stammen, zumindest teilweise periodische Signale mit der jeweiligen aktuellen Position des anderen Fahrzeugs (10a) beinhalten.

8. Verfahren nach Anspruch 7,
welches ferner einen Schritt des Berechnens eines Streckenverlaufs (30) basierend auf den periodischen Signalen aufweist,
wobei der berechnete Streckenverlauf (30) im Schritt des Berechnens der Lichtverteilung verwendet wird.

9. Verfahren nach Anspruch 8,
wobei der Schritt des Berechnens eines Streckenverlaufs (30) zumindest teilweise durch Aneinanderreihung von Positionen anderer Fahrzeuge (10a) erfolgt.

10. Verfahren nach einem der Ansprüche 7 bis 9,
welches ferner einen Schritt des Erkennens entgegenkommender oder vorausfahrender Fahrzeuge (10a) unter Verwendung der periodischen Signale aufweist,
wobei die Positionen und/oder Fahrtstrecken entgegen-kommender oder vorausfahrender Fahrzeuge (10a) im Schritt des Berechnens der Lichtverteilung verwendet werden.

11. Verfahren nach einem der vorhergehenden Ansprüche, welches ohne Verwendung von Kameradaten und/oder ohne Verwendung von Kartendaten ausgeführt wird.

12. Verfahren nach einem der vorhergehenden Ansprüche, wobei das Berechnen der Lichtverteilung zusätzlich auf Kameradaten und/oder Kartendaten basiert.

13. Verfahren nach einem der vorhergehenden Ansprüche, welches in einer elektronischen Schaltung (12), vorzugsweise einer Fernlichtassistentenschaltung, ausgeführt wird.

14. Fahrzeug (10), aufweisend:
- Fahrzeug-zu-X-Kommunikationsmittel (14),
- eine elektronische Schaltung (12), welche zur Ausführung eines Verfahrens nach einem der vorhergehenden Ansprüche ausgebildet ist, sowie
- zumindest einen Scheinwerfer (20, 24), dessen Lichtverteilung von der elektronischen Schaltung (12) gesteuert wird.

## Claims

1. A method for controlling the light distribution of vehicle headlights (20, 24) comprising the following steps:
- receiving data from a vehicle-to-X communication, and
- calculating the light distribution based at least on said data,
**characterised in that**
in the event that less data is received from vehicle-to-X communication within a predetermined time period than a predetermined threshold value, the method includes a step of setting the light distribution to a default value corresponding to the low beam of the vehicle headlights (20, 24).

2. The method according to claim 1,
wherein the light distribution includes a beam range of the vehicle headlights (20, 24).

3. The method according to any one of the preceding claims,
wherein the light distribution includes one or more beam directions of the vehicle headlights (20, 24).

4. The method according to any one of the preceding claims, wherein at least some of the data originate from other vehicles (10a).

5. The method according to claim 4,
wherein the data originating from other vehicles (10a) include, at least in part, information about a respective route travelled.

6. The method according to claim 5,
further comprising a step of calculating a route (30) based on information about the respective routes travelled by other vehicles (10a),
wherein the calculated route (30) is used in the step of calculating the light distribution.

7. The method according to any one of claims 4 to 6,
wherein the data originating from other vehicles (10a) include, at least in part, periodic signals containing the respective current position of the other vehicle (10a).

8. The method according to claim 7,
further comprising a step of calculating a route (30) based on the periodic signals, wherein the calculated route (30) is used in the step of calculating the light distribution.

9. The method according to claim 8,
wherein the step of calculating a route (30) is performed at least in part by stringing together the positions of other vehicles (10a).

10. The method according to any one of claims 7 to 9,
further comprising a step of detecting oncoming or preceding vehicles (10a) using the periodic signals,
wherein the positions and/or routes travelled of oncoming or preceding vehicles (10a) are used in the step of calculating the light distribution.

11. The method according to any one of the preceding claims, which is carried out without using camera data and/or without using map data.

12. The method according to any one of the preceding claims, wherein the calculation of the light distribution is additionally based on camera data and/or map data.

13. The method according to any one of the preceding claims, which is carried out in an electronic circuit (12), preferably a high-beam assist circuit.

14. A vehicle (10) comprising:
- vehicle-to-X communication means (14),
- an electronic circuit (12) that is configured to perform a method according to one of the preceding claims, and
- at least one headlight (20, 24) whose light distribution is controlled by the electronic circuit (12).

## Revendications

1. Procédé de commande de la distribution de la lumière des phares de véhicule (20, 24) présentant les étapes suivantes :
- la réception de données issues d'une communication véhicule-X, et
- le calcul de la distribution de la lumière sur la base au moins desdites données, **caractérisé en ce que**
le procédé présente, dans le cas où, au cours d'une période spécifiée, moins de données issues de la communication véhicule-X sont reçues qu'un seuil spécifié, une étape d'ajustement de la distribution de la lumière à une valeur standard qui correspond à un feu de croisement des phares du véhicule (20, 24).

2. Procédé selon la revendication 1,
dans lequel la distribution de la lumière comprend une portée d'éclairage des phares du véhicule (20, 24).

3. Procédé selon l'une quelconque des revendications précédentes,
dans lequel la distribution de la lumière comprend une ou plusieurs directions d'éclairage des phares du véhicule (20, 24).

4. Procédé selon l'une des revendications précédentes, dans lequel les données proviennent au moins partiellement d'autres véhicules (10a).

5. Procédé selon la revendication 4,
dans lequel les données qui proviennent d'autres véhicules (10a) comportent au moins partiellement des informations concernant un trajet respectif parcouru.

6. Procédé selon la revendication 5,
qui présente en outre une étape de calcul d'un itinéraire (30) basée sur des informations concernant les trajets respectifs parcourus par d'autres véhicules (10a),
dans lequel l'itinéraire calculé (30) est utilisé dans l'étape de calcul de la distribution de la lumière.

7. Procédé selon l'une quelconque des revendications 4 à 6,
dans lequel les données provenant d'autres véhicules (10a) comprennent au moins partiellement des signaux périodiques indiquant la position actuelle respective de l'autre véhicule (10a).

8. Procédé selon la revendication 7,
qui présente en outre une étape de calcul d'un itinéraire (30) basé sur les signaux périodiques,
dans lequel l'itinéraire calculé (30) est utilisé dans l'étape de calcul de la distribution de la lumière.

9. Procédé selon la revendication 8,
dans lequel l'étape de calcul d'un itinéraire (30) est réalisée au moins partiellement en concaténant les positions d'autres véhicules (10a).

10. Procédé selon l'une quelconque des revendications 7 à 9,
qui présente en outre une étape de détection des véhicules venant en sens inverse ou précédant (10a) à l'aide des signaux périodiques,
dans lequel les positions et/ou les trajets des véhicules venant en sens inverse ou précédant (10a) sont utilisés dans l'étape de calcul de la distribution de la lumière.

11. Procédé selon l'une quelconque des revendications précédentes, mis en œuvre sans utilisation de données de caméra et/ou sans utilisation de données cartographiques.

12. Procédé selon l'une quelconque des revendications précédentes, dans lequel le calcul de la distribution de la lumière est en outre basé sur des données de caméra et/ou des données cartographiques.

13. Procédé selon l'une quelconque des revendications précédentes, mis en œuvre dans un circuit électronique (12), de préférence un circuit d'assistance aux feux de route.

14. Véhicule (10), présentant :
- des moyens de communication véhicule-X (14),
- un circuit électronique (12) configuré pour réaliser un procédé selon l'une quelconque des revendications précédentes, ainsi que
- au moins un phare (20, 24) dont la distribution de la lumière est commandée par le circuit électronique (12).
